Europäisches Patentamt

(19) European Patent Office

Office européen des brevets

(11) Numéro de publication: **0 206 910**
**B1**

(12) **FASCICULE DE BREVET EUROPÉEN**

(45) Date de publication du fascicule du brevet:
**27.12.89**

(21) Numéro de dépôt: **86401284.4**

(22) Date de dépôt: **13.06.86**

(51) Int. Cl.⁴: **B 61 D 17/22**, B 62 D 47/02

(54) **Passage de communication entre véhicules.**

(30) Priorité: **14.06.85 FR 8509011**

(43) Date de publication de la demande:
**30.12.86 Bulletin 86/52**

(45) Mention de la délivrance du brevet:
**27.12.89 Bulletin 89/52**

(84) Etats contractants désignés:
**AT BE CH DE FR GB IT LI LU NL**

(56) Documents cité:
**DE-A-1 780 097**
**GB-A-666 383**
**GB-A-1 361 064**
**GB-A-2 122 956**
**US-A-2 126 837**
**US-A-3 410 226**

(73) Titulaire: **Caoutchouc Manufacturé et Plastiques Société Anonyme dite:, 143 bis rue Yves Le Coz B.P. 554, F-78005 Versailles Cedex (FR)**

(72) Inventeur: **Bechu, Jean- Pierre, "Les Poissons" 20ter, rue de Bezons, F-92400 Courbevoie (FR)**
Inventeur: **Champleboux, Jacques Joseph, 36, rue de Trémonteix, F-63000 Clermont- Ferrand (FR)**

**Description**

L'invention concerne les véhicules ferroviaires pour voyageurs ou encore automotrices, métros, tramways ou autobus articulés, dans lesquels la circulation d'un véhicule à l'autre est rendue possible au public par l'intermédiaire d'éléments déformables usuellement appelés soufflets.

Il existe divers moyens d'intercirculation permettant la circulation soit des agents autorisés lorsque ces passerelles ne présentent pas d'étanchéité et de sécurité totale, soit du public, lorsque les conditions de sécurité sont suffisantes.

Une famille de ces dispositifs fait appel à une structure rigide supportée par les chassis des 2 voitures successives. L'autre famille est constituée de soufflets en forme d'accordéon réalisés à partir de matériaux textiles enduits de caoutchouc ou de plastique. Les brevets FR-A1-2 328 141 de la société TAURUS GUMIPARI VALLALAT et FR-A1-2 333 657 de HUBNER GUMMI UND KUNSTSTOFFE proposent un perfectionnement du principe à soufflet à partir de parois composites de textiles et d'élastomère, sous forme de lames, dont l'assemblage des bords, alternativement intérieur et extérieur, confère au système un caractère autoportant.

Un dispositif qui combine le principe de la passerelle rigide avec la déformabilité de parois souples est décrit dans le brevet GB-A-2 009 691 de S.I.G. Un tel dispositif assure la fonction étanchéité par un joint roulant déformable et la fonction insonorisation par le glissement télescopique de parois rigides. Il ne présente pas de caractère autoportant sans moyen mécanique supplémentaire.

Le brevet GB-A-2 122 956 de TAURUS GUMMIPARI VALLALAT décrit un moyen de communication entre deux véhicules, qui est autoportant et monobloc. Il utilise un matériau cellulaire homogène, du polyuréthane de densité voisine de 1 g/cm$^3$, et de dureté élevée (70 à 100 unités Shore). Ce matériau ne présentant pas de caractéristiques mécaniques et, surtout, de résistance dynamique suffisantes, il est nécessaire de donner au dispositif une forme d'accordéon, pour lui conférer les possibilités de déformation nécessaires sous l'effet des contraintes de service. La réalisation d'une telle forme en accordéon nécessite un moule compliqué, donc coûteux, et rend les opérations de démoulage délicates pour ne pas blesser la pièce. Par nature, le matériau utilisé ne résiste ni au feu ni aux actes de vandalisme et sa structure homogène ne garantit pas une bonne isolation phonique.

Le document GB-A-1 361 064 du BRITISH RAILWAYS BOARD propose un dispositif utilisant, lui aussi, du polyuréthane cellulaire, matériau homogène peu favorable à l'isolation phonique, qui nécessite l'application d'une peau, (par vaporisation, par exemple) pour assurer une protection contre les intempéries et contre le feu. Ledit dispositif n'est pas autoportant puisqu'il nécessite des bras de support. Il n'est pas, non plus, monobloc et requiert, pour son montage, la modification de l'extrémité du véhicule auquel il vient s'adapter, ce qui complique les opérations de mise en place.

Le système d'intercommunication, objet du brevet US-A-3 410 226, de B.F. GOODRICH, est, lui aussi, constitué d'un matériau cellulaire. Il n'est ni autoportant ni monobloc et ne peut fonctionner dans les conditions de service usuelles que parce qu'il est mis sous contrainte de compression à l'état de repos. Il n'est donc déformable que grâce à un artifice mécanique. De plus, en raison du grand nombre d'éléments qui y sont insérés, tels que les fixations, on les equerres et en raison de la présence de vides, il est d'une réalisation compliquée, donc onéreuse.

Le brevet US-A-2 126 837, de B.F. GOODRICH également, décrit une structure multicouche pour réaliser une paroi et non un tunnel continu. Ladite paroi est constituée de caoutchouc compact renforcé de textile, matériau peu favorable à une isolation phonique correcte. Elle est fabriquée à plat et ne possède donc pas une forme d'anneau. Elle ne présente pas, non plus, de caractère d'autoportance.

Dans le document GB-A-666 383, BRITISH BELTING & ASBESTOS présente des matériaux destinés au garnissage des zones de raccordement d'un tunnel d'intercirculation aux parois des véhicules, ledit garnissage pouvant être, plus particulièrement, réalisé en amiante. En raison de la législation actuelle de nombreux pays, un tel garnissage ne pourrait plus être utilisé aujourd'hui.

Le document DE-A-1 780 097 de l'INSTITUT FUER SCHIENENFAHRZEUGE, propose une liaison courte entre deux véhicules, faite de deux dispositifs glissant l'un sur l'autre, les profilés constitutifs entourant la section de passage et la surface extérieure de l'extrémité du véhicule. Le système fonctionne comme un amortisseur, en cas de choc. Il est réalisé en polyuréthane cellulaire, homogène, comportant une peau, n'offrant pas de protection contre le feu ou le vandalisme et beaucoup moins efficace, au point de vue de l'isolation phonique, qu'une structure composite à couches multiples et alternées d'un matériau élastique compact et d'un matériau cellulaire. Le polyurethane cellulaire utilisé doit vraissemblablement, pour présenter les caractéristiques de compression indiquées, avoir une densité elevée ne permettant pas la flexion désirée lors du passage des courbes et contre-courbes.

L'analyse de l'art antérieur montre qu'un dispositif unique, de réalisation simple qui soit, simultanément, déformable, autoportant et qui assure parfaitement les fonctions d'étanchéité et d'isolation phonique de même niveau que celle apportée par les parois rigides des voitures en garantissant, de plus, une protection contre le feu et contre le vandalisme n'est pas connu.

L'invention part d'un dispositif de passage connu, p.ex. du docement GB-A-2 122 956, et se compose des caractéristiques contennes dans la partie caractérisante de la revendication 1.

Le dispositif du passage de communication selon l'invention est composé d'un élément monobloc, de forme cylindrique et de section générale ovoïde, constitué par une paroi composite, déformable dans son ensemble sans artifice mécanique - c'est-à-dire par compression ou allongement homogène des matériaux constitutifs-, et de plus autoportante, comportant une couche externe en élastomère compact, une ou plusieurs couches d'un matériau cellulaire très déformable, mais de module élevé, et une couche intérieure, en élastomère éventuellement renforcé de cables métalliques ou textiles.

La couche externe assure la fonction étanchéité et protection contre les intempéries et les agents atmosphériques. Il est avantageux de la réaliser dans un mélange à base d'élastomère, tel que, à titre d'exemple non limitatif, du polychloroprène, comportant éventuellement des charges ou des ingrédients améliorant la tenue au feu et aux projections d'huiles et de corps gras.

Au moins une couche de matériau cellulaire, d'une masse spécifique inférieure à 200 Kg/m$^3$ et de module supérieur ou égal à 0,2 MPa, assure, à la fois, l'isolation phonique et thermique - ce qui est important dans la liaison entre véhicules climatisés - ainsi que, par un effet poutre bien connu, le maintien de l'écartement des éléments de la paroi, ce qui confère à l'ensemble un caractère autoportant.

La couche interne, éventuellement renforcée de nappes de textiles à haut module ou de cables métalliques assure une protection contre les tentatives de vandalisme par découpe ou inflammation et contre le choc des bagages.

Cette couche peut être com-plétée par l'adjonction d'un plancher qui suit la déformation de l'ensemble et accroît l'isolation acoustique en direction du train de roulement.

Les caractéristiques et variantes de l'invention seront mieux comprises à la lecture de la description ci-après et en se référant aux dessins, sur lesquels:

- la figure 1 montre une réalisation de l'art antérieur,
- la figure 2 représente une section droite du passage de communication selon l'invention,
- la figure 3 illustre différentes variantes de réalisation de la paroi du passage de communication selon l'invention,
- la figure 4 est une coupe longitudinale de la paroi montrant le raccordement de ladite paroi sur une bride de fixation au véhicule.

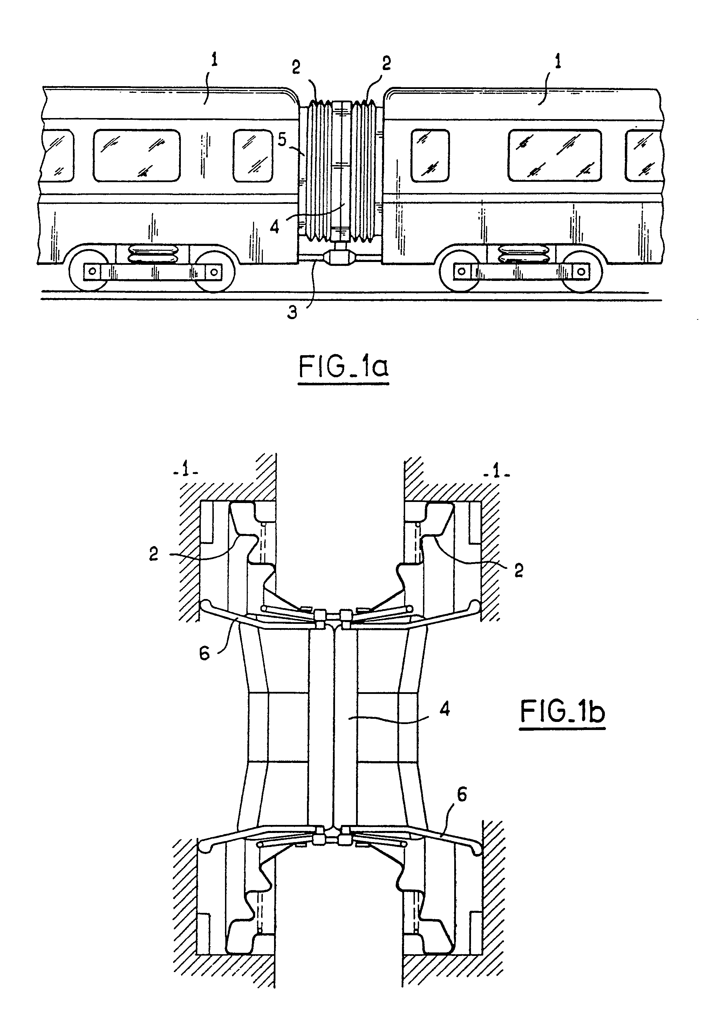

Sur la figure 1, la vue 1a représente l'extrémité de deux véhicules ferroviaires (1) reliés par un attelage (3). Le dispositif d'intercirculation usuel est constitué de deux soufflets (2) reliés par une bride d'assemblage médian (4) et fixés aux véhicules (1) par des brides (5).

La vue 1b est une coupe suivant un plan horizontal d'un des dispositifs connus où les fonctions étanchéité et isolation acoustique sont séparées, la première réalisée par deux soufflets (2) reliés par une bride d'assemblage médian (4) qui forme une amorce de tunnel rigide. La continuité de l'isolation acoustique est assurée par glissement de parois rigides articulées (6) fixées aux véhicules (1).

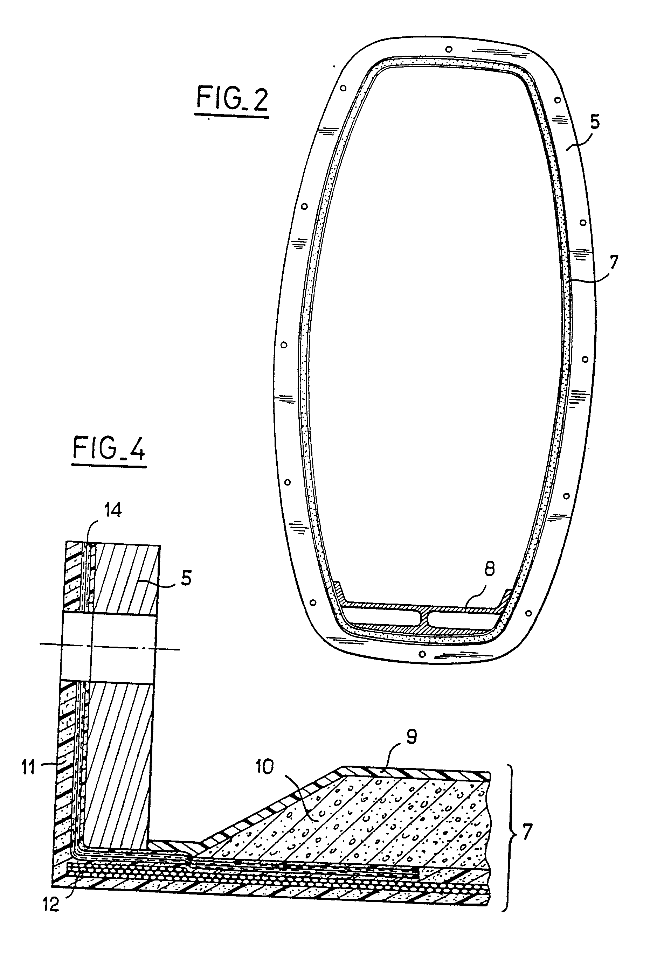

La figure 2, coupe orthogonale à l'axe des véhicules, montre la section ovoïde du passage de communication selon l'invention, qui se fixe à la face frontale de chaque véhicule par une bride (5), ladite paroi (7) étant constituée d'un assemblage de matériaux polymériques compacts et cellulaires. Un plancher déformable (8) est ajouté pour assurer la continuité de niveau avec les véhicules et améliorer, de ce fait, l'isolation acoustique en direction du train de roulement.

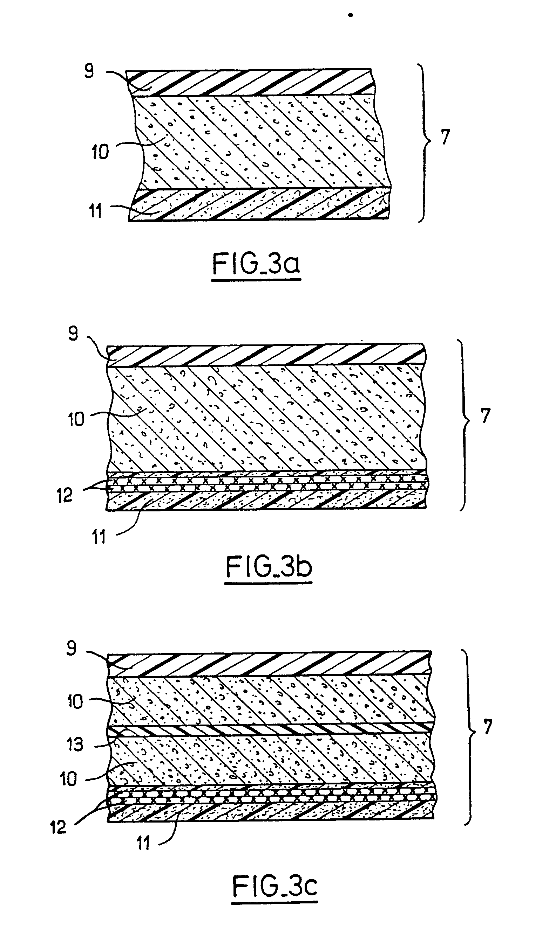

La figure 3 illustre différentes compositions de la paroi (7) du passage de communication. Sur la vue 3a, la paroi (7) est constituée d'une couche externe (9) en mélange compact à base d'élastomère, de préférence à base de polychloroprène, pour assurer la protection contre le feu, d'une couche intermédiaire (10) en matériau cellulaire de masse spécifique inférieure à 200 Kg/m$^3$, et de préférence comprise entre 70 et 100 Kg/m$^3$ et de module au moins égal à 0,2 MPa, préférentiellement réalisé par expansion d'un mélange à base de terpolymère éthylène/propylène réticulé et enfin, d'une couche interne (11), en mélange élastomérique compact dont la formulation peut être conçue pour assurer une bonne résistance au feu. La vue 3b ne se différencie de la vue 3a que par l'intégration, au sein de la couche interne (11), d'une ou plusieurs couches (12) de matériaux de renforcement textiles ou métalliques assurant, en plus, la protection contre le vandalisme.

La vue 3c représente une paroi (7) à 5 couches alternées, successivement de l'extérieur vers l'intérieur, des couches (9) et (10) identiques à celles décrites dans les vues 3a et 3b, puis une couche (13), en élastomère compact, interposée entre deux couches (10) afin de multiplier le nombre d'interfaces de matériaux de caractéristiques différentes ce qui est de nature à accroître l'isolation phonique en réduisant les possibilités de transmission des sons. Viennent ensuite une seconde couche cellulaire (10) et la couche intérieure (11) qui peut, éventuellement, comporter des éléments de renforcement (12), les couches (10) et (12) étant identiques à celles décrites dans la vue 3b.

La figure 4 est une coupe longitudinale de la paroi (7). Elle explicite une des modalités possibles de raccordement des éléments de la paroi à la bride rigide (5) - métallique ou réalisée partir de composites rigides - qui permet la fixation du passage de communication à la face frontale des véhicules. On y distingue la couche extérieure (9) en mélange à base d'élastomère compact, la couche en matériau cellulaire (10) et la couche interne (11) qui se prolonge sous la bride (5) au contact de la face frontale du véhicule (1). Sur cette figure, la couche interne (11) comporte un renforcement textile ou métallique (12). Une nappe de cables textiles ou métalliques (14) dite nappe de raccordement assure une liaison progressive, par recouvrement de la couche de renforcement (12), entre la paroi (7) et la bride (5) de fixation à la face frontale du véhicule.

En conclusion, l'invention est caractérisée par une réalisation monobloc d'un passage de communication entre véhicules, ce qui permet un montage facile et direct sur les faces frontales en regard des véhicules, par l'intermédiaire des brides de fixation, sans utilisation d'artifices mécaniques ou assemblages accordéon. Ledit passage de communication présente, simultanément, les qualités requises pour assurer les fonctions de protection contre le feu, les intempéries et agents atmosphériques, contre les chocs de bagages, contre le vandalisme, ainsi que les fonctions d'isolation thermique et acoustique de haut niveau requise par les matériels de transport modernes, tout en étant capable de supporter par lui-même la charge utile nécessaire, à poids modéré. Le passage de communication peut être aisément réalisé par pose, sur un mandrin de forme appropriée, monté sur un tour de confection, des différents éléments constitutifs de la paroi intégrant les brides de fixation. La confection est suivie d'un sanglage ou tout autre moyen de maintien convenable et d'une vulcanisation, généralement en autoclave. Le plancher est moulé et soit posé soit collé, après finition du passage de communication. Pour certaines applications particulières, il est possible d'assembler, grâce à une bride intermédiaire deux ou plusieurs passages de communication tels que décrits précédemment. L'homme de l'art peut, bien entendu, apporter au dispositif décrit précédemment et à ses applications illustrées à titre d'exemples non limitatifs, diverses modifications sans sortir du cadre de l'invention.

**Revendications**

1. Passage de communication entre véhicules (1) successifs ferroviaires ou routiers, assurant l'étanchéité aux intempéries et agents atmosphériques ainsi que l'isolation phonique et thermique, monobloc et autoportant, caractérisé en ce qu'il est de section cylindrique sensiblement constante et en ce que sa paroi (7), composée d'un composite multicouche hétérogène, réalisé par alternance de matériaux polymériques cellulaires et compacts, est déformable dans son ensemble par compression ou allongement homogène des matériaux constitutifs.

2. Passage de communication selon la revendication 1, caractérisé en ce que le matériau composite constitutif de la paroi (7) est constitué d'au moins trois couches, la plus externe (9) en élastomère compact résistant aux intempéries, la couche intermédiaire (10) en polymère cellulaire, intimement liée aux couches voisines, assurant l'isolation phonique et l'écartement sensiblement constant des couches (9) et (11) de la paroi (7) et la couche interne (11), en élastomère compact, complétant, par sa masse, l'isolation phonique et assurant la protection des voyageurs.

3. Passage de communication selon l'une des revendications 1 ou 2, caractérisé en ce qu'au moins une couche intermédiaire supplémentaire (13), constituée d'élastomère compact, est interposée entre deux couches de matériau cellulaire (10) de façon à multiplier les interfaces entre matériaux différents et accroître, de ce fait, l'isolation phonique.

4. Passage de communication selon l'une des revendications 1 à 3, caractérisé en ce que le matériau cellulaire de la (ou les) couche(s) intermédiaire(s) (10) présente une masse spécifique inférieure ou égale à 200 kg/m$^3$ et un module (sous compression de 50 %) au moins égal à 0,1 MPa.

5. Passage de communication selon l'une des revendications 1 à 4, caractérisé en ce que la couche interne (11) comporte des renforcements (12) métalliques ou à base de textiles de haut module, assurant la protection contre le vandalisme.

6. Passage de communication selon la revendication 5 caractérisé en ce que le matériau de renforcement (12) de la couche interne (11) est de l'aramide.

7. Passage de communication selon l'une des revendications 1 à 6, caractérisé en ce que les couches externe (9) et interne (11) sont constituées de mélanges à base d'élastomères dont la composition assure une bonne résistance au feu.

8. Passage de communication selon l'une des revendications 1 à 7 caractérisé en ce que les mélanges élastomériques constitutifs des couches interne (11) et externe (9) sont à base de polychloroprène.

9. Passage de communication selon l'une des revendications 1 à 8 caractérisé en ce que la fixation aux faces frontales des véhicules (1) est assurée, de manière rigide, par l'intermédiaire de brides (5) métalliques ou réalisées en composite rigide.

10. Passage de communication selon l'une des revendications 1 à 9 caractérisé en ce qu'un plancher déformable (8), en élastomère compact, est ajouté pour assurer la continuité des niveaux entre véhicules et accroître l'isolation phonique en direction du train de roulement.

11. Dispositif d'intercommunication entre véhicules ferroviaires ou routiers, caractérisé en ce qu'il est constitué par l'assemblage, par l'intermédiaire d'une ou de plusieurs brides intermédiaires d'au moins deux passages de communication conformes à l'une des revendications 1 à 10.

## Patentansprüche

1. Aus einem Stück bestehende und selbsttragende Durchgangsverbindung zwischen aufeinanderfolgenden Schienen- oder Straßenfahrzeugen (1), die eine Abdichtung gegenüber Witterungs- und atmosphärischen Einflüssen sowie eine Schall- und Wärmedämmung gewährleistet, dadurch gekennzeichnet, daß sie einen im wesentlichen gleichmäßigen trommelförmigen Querschnitt hat und daß ihre aus einem heterogenen Vielschichtverbund aus abwechselnd geschäumtem und kompaktem Polymermaterial bestehende Wand (7) in ihrer Gesamtheit durch homogene Komprimierung oder Dehnung der Bestandteilsmaterialien verformbar ist.

2. Durchgangsverbindung nach Anspruch 1, dadurch gekennzeichnet, daß das die Wand (7) bildende Verbundmaterial aus mindestens drei Schichten besteht, nämlich der äußeren Schicht (9) aus witterungsbeständigem Kompaktelastomer, der Zwischenschicht (10) aus mit den angrenzenden Schichten eng verbundenem Polymerschaumstoff, die eine Schalldämmung und einen im wesentlichen gleichbleibenden Abstand zwischen den Schichten (9) und (11) der Wand (7) gewährleistet, und der Innenschicht (11) aus Kompaktelastomer, die durch ihre Masse die Schalldämmung ergänzt und die Fahrgäste schützt.

3. Durchgangsverbindung nach einem der Ansprüche 1 oder 2, dadurch gekennzeichnet, daß mindestens eine aus Kompaktelastomer bestehende zusätzliche Zwischenschicht (13) zwischen zwei Schaumstoffschichten (10) eingebracht ist, um die Grenzflächen zwischen den unterschiedlichen Materialien zu vervielfachen und somit die Schalldämmung zu erhöhen.

4. Durchgangsverbindung nach einem der Ansprüche 1 bis 3, dadurch gekennzeichnet, daß der Schaumstoff der Zwischenschicht(en) (10) ein spezifisches Gewicht von weniger als oder gleich 200 kg/m$^3$ und ein Modul von mindestens 0,1 MPa (bei 50 %iger Komprimierung) aufweist.

5. Durchgangsverbindung nach einem der Ansprüche 1 bis 4, dadurch gekennzeichnet, daß die Innenschicht (11) Verstärkungen (12) aus Metall oder auf der Basis von Textilien mit hohem Modul aufweist, die einen Schutz gegen mutwillige Zerstörung bilden.

6. Durchgangsverbindung nach Anspruch 5, dadurch gekennzeichnet, daß das Verstärkungsmaterial (12) der Innenschicht (11) aus Aramid besteht.

7. Durchgangsverbindung nach einem der Ansprüche 1 bis 6, dadurch gekennzeichnet, daß die Außenschicht (9) und die Innenschicht (11) aus Gemischen auf der Basis von aufgrund ihrer Zusammensetzung eine hohe Feuerbeständigkeit gewährleistenden Elastomeren besteht.

8. Durchgangsverbindung nach einem der Ansprüche 1 bis 7, dadurch gekennzeichnet, daß die Elastomergemische zur Bildung der Innenschicht (11) und der Außenschicht (9) auf der Basis von Polychloropren bestehen.

9. Durchgangsverbindung nach einem der Ansprüche 1 bis 8, dadurch gekennzeichnet, daß die Befestigung an den Stirnseiten der Fahrzeuge (1) auf starre Weise durch Flansche (5) aus Metall oder aus einem starren Verbund sichergestellt ist.

10. Durchgangsverbindung nach einem der Ansprüche 1 bis 9, dadurch gekennzeichnet, daß ein verformbarer Boden (8) aus Kompaktelastomer hinzugefügt ist, um ein gleichmäßiges Niveau zwischen den Fahrzeugen sicherzustellen und die Schalldämmung in Richtung des Fahrwerks zu erhöhen.

11. Vorrichtung zur Verbindung zwischen Schienen- oder Straßenfahrzeugen, dadurch gekennzeichnet, daß sie durch Zusammenfügung von mindestens zwei Durchgangsverbindungen nach einem der Ansprüche 1 bis 10 mit Hilfe eines oder mehrerer Zwischenflansche gebildet ist.

## Claims

1. Communicating passage between consecutive railway or road vehicles (1), providing a seal against the weather and atmospheric agents as well as sound and heat insulation, being in one unit and self-supporting, characterized in that it is of substantially constant cylindrical cross-section and in that its wall (7) formed from a heterogeneous multilayer composite produced by alternation of cellular and compact polymeric materials is deformable as a whole by homogeneous compression or elongation of the constituent materials.

2. Communicating passage according to claim 1, characterized in that the composite material constituting the wall (7) is constituted of at least three layers, the outermost (9) being of compact elastomer impervious to the weather, the intermediate layer (10) of cellular polymer intimately joined to the adjacent layers, providing sound insulation and the substantially constant spacing of the layers (9) and (11) of the wall (7) and the inner layer (11) of compact elastomer completing the sound insulation by virtue of its bulk and ensuring the protection of the passengers.

3. Communicating passage according to one of claims 1 or 2, characterized in that at least one additional intermediate layer (13), formed from compact elastomer, is interposed between two layers of cellular material (10) in such a way as to multiply the interfaces between different materials and thereby to increase the sound insulation.

4. Communicating passage according to one of claims 1 to 3, characterized in that the cellular material of the intermediate layer(s) (10) has a specific weight less than or equal to 200 kg/m3 and a modulus (under 50% compression) at least equal to 0.1 MPa.

5. Communicating passage according to one of claims 1 to 4 characterized in that the inner layer (11) comprises reinforcements (12) of metal or based on high-modulus textiles, providing protection against vandalism.

6. Communicating passage according to claim 5, characterized in that the reinforcing material (12) of the inner layer (11) is aramid.

7. Communicating passage according to one of claims 1 to 6, characterized in that the outer (9) and inner (11) layers are formed by elastomer-based mixtures the composition of which provides good fire resistance.

8. Communicating passage according to one of claims 1 to 7, characterized in that the elastomeric compositions forming the inner (11) and outer (9) layers are polychloroprene-based.

9. Communicating passage according to one of claims 1 to 8, characterized in that its fastening to the end surfaces of the vehicles (1) is provided in a rigid manner by means of flanges (5) made of metal or of rigid composite material.

10. Communicating passage according to one of claims 1 to 9, characterized in that a deformable floor (8) of compact elastomer is added to provide continuity of levels between the vehicles and to increase the sound insulation in the direction of the undercarriage.

11. Device for intercommunication between rail or road vehicles, characterized in that it is formed by assembling at least two communicating passages according to one of the claims 1 to 10 by means of one or more intermediate flanges.

FIG_1a

FIG_1b

FIG. 2

FIG. 4

FIG.3a

FIG.3b

FIG.3c